# EUROPÄISCHE PATENTSCHRIFT

(11) **EP 3 262 995 B1**
(45) Veröffentlichungstag und Bekanntmachung des Hinweises auf die Patenterteilung: **27.10.2021**
(21) Anmeldenummer: 17180415.6
(22) Anmeldetag: 06.09.2016
(51) Int. Cl.: A47J 31/44

(54) **KAFFEEMASCHINE, MILCHAUFSCHÄUMSYSTEM SOWIE MILCHAUFSCHÄUMVERFAHREN**
COFFEE MACHINE, MILK FOAMING YSTEM AND MILK FOAMING METHOD
MACHINE À CAFÉ, SYSTÈME ÉMULSIONNEUR DE LAIT ET PROCÉDÉ DESTINÉ À ÉMULSIONNER LE LAIT

(30) Priorität: 23.11.2015 DE 102015120237
(43) Veröffentlichungstag der Anmeldung: 03.01.2018
(62) Teilanmeldung aus: 16187337.7
(73) Patentinhaber: Eugster/Frismag AG, 8580 Amriswil (CH)
(72) Erfinder: Fischer, Daniel, 8590 Romanshorn (CH); Wildhaber, Michael, 9247 Henau (CH); Kern, Patrick, 9200 Gossau (CH); NIJSEN, Andreas Jacobus Louis, 7521 AT Enschede (NL); VAN DER KAMP, Hedzer Michiel Adriaan, 7205 GJ Zutphen (NL); VAN BOXTEL, Jaap Jozua, 3853 CB Ermelo (NL); KUIPER, Jelmer Jeroen, 7512 HG Enschede (NL)
(74) Vertreter: Patent- und Rechtsanwälte Behrmann Wagner PartG mbB

(56) Entgegenhaltungen:
- EP-A1- 2 042 063
- WO-A1-2015/082391

## Beschreibung

Die Erfindung betrifft eine Kaffeemaschinegemäß dem Oberbegriff des Anspruchs 1 mit einer Milchaufschäumvorrichtung, wobei der Milchschaum einer weiteren Getränkekomponete, nämlich Kaffee, zusetzbar ist, und wobei die Kaffeemaschine eine Injektionseinheit zum Auslaugen und/oder Auflösen von in Getränkesubstratkapseln vorgesehenem Getränkesubstrat oder eine integrale Mühle und eine Brüheinheit, in der von der Mühle aus Kaffeebohnen hergestelltes Kaffeemehl auslaugbar ist (ausgelaugt wird), aufweist, wobei die Milchaufschäumvorrichtung eine mechanische, dynamische Emulgiereinrichtung aufweist und einen Stator und einen relativ zu dem Stator um eine Rotationsachse rotierbar antreibbaren Rotor umfasst, wobei der Emulgiereinrichtung Milch und Luft einlassseitig zuführbar und durch Rotation des Rotors relativ zu dem Stator Scherkräften aussetzbar und dadurch Milchschaum erzeugbar ist, wobei der Milchschaum auslassseitig ableitbar ist, und wobei zum Erzeugen der (auf die Milch und die Luft wirkenden) Scherkräfte sowohl Rotor als auch Stator mehrere, (bevorzugt jeweils kreisringförmig angeordnete) Scherelemente umfassende Scherelementreihen aufweist, wobei die Scherelementreihen des Rotors und die Scherelementreihen des Stators derart intermittierend ineinandergreifen, dass die durch die intermitterenden Scherelementreihen strömende Milch und Luft bei Rotation des Rotors jeweils zwischen einer der Scherelementreihen des Rotors und einer unmittelbar benachbarten Scherelementreihe des Stators scherbar sind bzw. geschert werden.

Auch betrifft die Erfindung ein Milchaufschäumsystem gemäß Anspruch 11 sowie ein Milchaufschäumverfahren gemäß dem Oberbegriff des Anspruchs 12, wobei Milch und Luft durch eine mechanische Emulgiereinrichtung, umfassend einen Stator und einen relativ zu dem Stator um eine Rotationsachse rotierbar angetriebenen Rotor gefördert werden, wobei in der Emulgiereinrichtung Scherelementreihen des Rotors und Scherelementreihen des Stators derart intermitterend ineinandergreifen, dass die durch die intermitterenden Scherelemente strömende Milch und Luft bei der Rotation des Rotors jeweils zwischen einer der Scherelementreihen des Rotors und einer unmittelbar benachbarten Scherelementreihen des Stators geschert werden.

Aus der WO 2015/082391 A1 ist eine Milchaufschäumvorrichtung bekannt, bei der Rotor und Stator axial ineinandergreifen und die Scherelementreihen des Rotors und die Scherelementreihen des Stators in radialer Richtung alternierend angeordnet ist, so dass die Milch je nach Zuführung radial innen oder radial außen die Scherelementreihen in radialer Richtung nach außen oder innen passiert. Die bekannte Milchaufschäumvorrichtung weist Nachteile auf. So ist diese aufgrund der prinzipbedingten, im Wesentlichen zylinderscheibenförmigen Form, mit einer geringen Längenerstreckung und einer im Verhältnis dazu großen Durchmessererstreckung schwierig in Getränkezubereitungsvorrichtungen, wie Kaffeemaschinen zu integrieren. Als nachteilig wird zudem empfunden, dass die Scherwirkung aufgrund der in radialer Richtung unterschiedlichen Winkelgeschwindigkeit von Scherspalt zu Scherspalt in radialer Richtung unterschiedlich ist. Darüber hinaus ist die bekannte Milchaufschäumvorrichtung hinsichtlich ihrer Reinigbarkeit verbesserungsbedürftig, da aufgrund der unterschiedlichen Winkelgeschwindigkeiten unterschiedliche Strömungsgeschwindigkeiten resultieren und sich ein Freispülen insbesondere in einem großen bzw. äußeren Durchmesserbereich bei radialen Strömungsverhältnissen schwierig gestalten dürfte.

Aus der fachfremden DE 39 18 268 C1 ist eine Vorrichtung zum kontinuierlichen Tiefkühlen von essbaren Schäumen bekannt, die sich nicht zur Herstellung von Milchschaum durch Fördern von Milch und Luft durch intermittierende Scheerelementreihen eignet.

Ausgehend von dem vorgenannten Stand der Technik liegt der Erfindung die Aufgabe zugrunde, eine Kaffeemaschine mit einer verbesserten Milchaufschäumvorrichtung anzugeben, die einfach im Gehäuse solcher Kaffeemaschinen integrierbar ist. Bevorzugt sollen gleichmäßige Scherbedingungen über die Durchströmungsstrecke gegeben sein. Besonders bevorzugt ist es, wenn die Milchaufschäumvorrichtung der Kaffeemaschine derart ausgebildet ist, dass diese gut reinigbar ist.

Ferner besteht die Aufgabe darin, eine ein entsprechend verbessertes Milchaufschäumsystem anzugeben. Auch besteht die Aufgabe darin, ein entsprechend verbessertes Verfahren zum Aufschäumen von Milch anzugeben.

Diese Aufgabe wird hinsichtlich der Kaffeemaschine mit den Merkmalen des Anspruchs 1 gelöst, d.h. bei einer gattungsgemäßen Kaffeemaschine dadurch, dass die Scherelementreihen des Rotors und die Scherelementreihen des Stators entlang der Rotationsachse alternierend angeordnet sind. Bevorzugt umfasst eine solche verbesserte Milchaufschäumvorrichtung auch einen, insbesondere elektromotorischen Antrieb zum Rotieren des Rotors.

Hinsichtlich des Milchaufschäumsystemswird die Aufgabe mit den Merkmalen des Anspruchs 11 und hinsichtlich des Milchaufschäumverfahrens mit den Merkmalen des Anspruchs 12 gelöst.

Vorteilhafte Weiterbildungen der Erfindung sind in den Unteransprüchen angegeben.

In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Die Erfindung führt auf eine Getränkezubereitungsvorrichtung nämlich eine Kaffeemaschine mit einer erfindungsgemäßen Milchaufschäumvorrichtung, wobei der erzeugte Milchschaum bevorzugt einer weiteren Getränkekomponente, nämlich Kaffee zuführbar bzw. zusetzbar ist. Die Getränkezubereitungsvorrichtung weist eine Injektionseinheit zum Auslagen und/oder Auflösen von in Getränkesubstratkapseln vorgesehenem Getränkesubstrat auf oder eine Brüheinheitund eine integrale Milch, wobei in der Brüheinheit von der integralen Mühle aus Kaffeebohnen hergestelltes Kaffeemehl ausgelaugt bzw. Kaffee gebrüht wird.

Der Erfindung liegt der Gedanke zugrunde, die Scherelementreihen von Rotor und Stator zur Realisierung der intermittierenden Anordnung bzw. Wechselwirkung nicht (oder zumindest nicht nur) wie im Stand der Technik in radialer Richtung alternierend anzuordnen, sondern axial entlang der Rotationsachse, so dass also auf eine Scherelementreihe des Rotors axial benachbart eine Scherelementreihe des Stators folgt und dann wieder eine Scherelementreihe des Rotors usw. Dies führt dazu, dass die jeweils von einer Scherelementreihe des Rotors und einer Scherelementreihe des Stators gebildeten bzw. begrenzten Scherspalte in axialer Richtung über immer eine Scherelementreihe beabstandet sind und die Milch und die Luft in axialer Richtung durch die Scherelementreihen von Scherspalt zu Scherspalt strömen und dabei eine axiale Strecke entlang der Rotationsachse vom Einlass zum Auslass zurücklegen. Bevorzugt weisen zumindest ein Großteil (>50%) der Scherspalte dabei die gleiche Spaltbreite auf, was jedoch nicht zwingend ist. Die erfindungsgemäße axiale Schachtelung bzw. Hintereinanderanordnung der Scherelementreihen von Rotor und Stator hat erhebliche Vorteile. So ist es im Hinblick auf die Bauform möglich und bevorzugt eine langgestreckte Milchaufschäumvorrichtung bereitzustellen, die eher stabförmig angeordnet ist und sich durch eine vergleichsweise große Längen- oder eine geringe Breiten- bzw. Durchmessererstreckung auszeichnet. Solche Bauformen lassen sich vergleichsweise einfach in Gehäusen von Getränkezubereitungsvorrichtungen wie Kaffeemaschinen integrieren. Ein weiterer wesentlicher Vorteil besteht darin, dass (fakultative gleiche Scherspaltbeschaffenheit der Scherspalte vorausgesetzt) die Scherwirkung in den unterschiedlichen Scherspalte gleich ist, da nicht das Problem unterschiedlicher Winkelgeschwindigkeit in unterschiedlichen Scherspalten besteht. Jedenfalls nimmt die Scherwirkung in axialer Richtung nicht, zumindest nicht ohne besondere Maßnahmen wie eine Scherspaltbreitenveränderung, in axialer Richtung von Scherspalt zu Scherspalt zu oder ab. Darüber hinaus ist die Reinigbarkeit einer erfindungsgemäßen Milchaufschäumvorrichtung deutlich verbessert, da diese axial durchspülbar ist. Besonders zweckmäßig ist es dabei, wenn ein Einlassbereich einen über seine Axialerstreckung sich verändernden Durchmesserbereich aufweist, wobei sich der Durchmesser bevorzugt im Einlassbereich in Richtung der Scherelementreihen vergrößert und/oder der Durchmesser im Auslassbereich in axialer Richtung von den Scherelementreihen weg verkleinert.

Insgesamt bietet die erfindungsgemäße, bevorzugt keine Tiefkühleinrichtung umfassende, Milchaufschäumvorrichtung, bei der mindestens eine Scherelementreihe des Rotors in axialer Richtung sandwichartig aufgenommen ist zwischen zwei Scherelementreihen des Stators und/oder eine Scherelementreihe des Stators in axialer Richtung entlang der Rotationsachse sandwichartig aufgenommen ist zwischen zwei Scherelementreihen des Rotors die vorerwähnten Vorteile und ist darüber hinaus konstruktiv einfach realisierbar, insbesondere wenn die Scherelementreihen des Stators als nach radial innen ragende Fortsätze an einem Statorkörper (bevorzugt einteilig mit diesen ausgebildet) angeordnet sind, der gleichzeitig eine langgestreckte Gehäusefunktion für die Emulgiereinrichtung aufweist, also quasi die Emulgiereinrichtung bzw. eine Emulgierkammer der Emulgiereinrichtung umfänglich und in axialer Richtung entlang der Rotationsachse mit Radialabstand zu dieser begrenzt und bevorzugt der Rotor axial in diesen Statorkörper eingesetzt ist. Hierzu sind die rotorseitigen Scherelemente und die statorseitigen Scherelemente derart relativ zueinander angeordnet, dass in mindestens einer Relationsdrehposition des Rotors relativ zu dem Stator die Scherelemente des Rotors in Bereichen in Umfangsrichtung zwischen Scherelementen des Stators in axialer Richtung vorbeibewegt werden können, um den Rotor zu montieren oder auszuwechseln. In anderen Relativdrehpositionen ist der Rotor axial entlang der Rotationsachse über jeweils axial benachbarte Scherelemente des Stators gesichert. Bei der erfindungsgemäßen Milchaufschäumvorrichtung strömt die Milch und die Luft, wie erwähnt in axialer Richtung von in Umfangsrichtung um die Rotationsachse umlaufenden Scherspalt zu Scherspalt, wobei durch Rotation des Rotors und somit der Scherspaltreihen relativ zueinander die Milch und die Luft einem ständigen Richtungswechsel, insbesondere in Axialrichtung/Umfangs-richtung unterworfen sind.

Der aus der erfindungsgemäßen Vorrichtung und dem erfindungsgemäßen Verfahren resultierende Milchschaum hat eine Temperatur von über 0°C, insbesondere von über 5°C, ganz besonders bevorzugt von über 10°C. Bevorzugt wird die Milch zur Erzeugung von heißem Milchschaum in einem Bereich vor der Milchaufschäumvorrichtung im Rahmen der Vorrichtung, des Verfahrens und des Systems erwärmt, bevorzugt auf eine Temperatur von über 40°C, noch weiter bevorzugt von über 50°C.

Bevorzugt sind mindestens zwei, vorzugsweise mehr als zwei rotorseitige Scherelementreihen und mindestens zwei, vorzugsweise mehr als zwei statorseitige Scherelementreihen, jeweils umfassend mehrere in Umfangsrichtung beabstandete, bevorzugt radial verstellbare Scherelemente vorgesehen. Ganz besonders zweckmäßig ist es, wenn am Stator und am Rotor jeweils mindestens drei, bevorzugt mindestens vier, axial beabstandete Scherelementreihen vorgesehen sind. Bevorzugt weisen zumindest die Mehrzahl der Scherspalte den gleichen Außendurchmesser auf.

Besonders zweckmäßig ist eine Ausführungsform der Milchaufschäumvorrichtung, bei der die Scherelementreihen des Rotors, mehrere jeweils in Umfangsrichtung um die Rotationsachse beabstandete Scherelemente, insbesondere in Form von, bevorzugt einteilig mit einem Rotorkörper ausgebildeten, Radialfortsätzen umfassen, die sich von dem sich entlang der Rotationsachse erstreckenden Rotorkörper des Rotors in radialer Richtung, insbesondere von radial innen nach radial außen erstrecken derart, dass die Milch und die Luft entlang der Rotationsachse zwischen jeweils zwei der in Umfangsrichtung benachbarten Scherelemente einer Scherelementreihe zu der axial benachbarten Scherelementreihe des Stators strömen können.

Zusätzlich oder alternativ ist in Weiterbildung der Erfindung mit Vorteil vorgesehen, dass die Scherelementreihen des Stators jeweils mehrere in Umfangsrichtung um die Rotationsachse beabstandete Scherelemente umfassen, die sich von einem sich entlang der Rotationsachse erstreckenden, bevorzugt hohlzylindrischen, Statorkörper (insbesondere Gehäuse der Emulgiereinrichtung, die eine Emulgierkammer radial außen begrenzt) des Stators in radialer Richtung, insbesondere von radial außen nach radial innen, erstrecken, derart, dass die Milch und die Luft axial entlang der Rotationsachse zwischen jeweils zwei der in Umfangsrichtung benachbarten Scherelemente zu der axial benachbarten Scherelementreihe des Stators strömen (können). Grundsätzlich ist es möglich, wenn nur einige der Scherelementreihen des Rotors und/oder einige der Scherelementreihen des Stators mehrere in Umfangsrichtung beabstandete Scherelemente aufweisen - bevorzugt ist jedoch eine Ausführungsform, bei der sämtliche Scherelementreihen des Rotors und/oder sämtliche Scherelementreihen des Stators solche, in Umfangsrichtung beabstandete Scherelemente aufweisen. Zuvor ist als besonders vorteilhaft eine Ausführungsform beschrieben worden, bei der der Rotor radial innerhalb des Stators sitzt und relativ zu diesem rotiert. Eine alternative Konstruktion sieht vor, einen radial inneren Stator vorzusehen, um den herum der dann als Hohlkörper ausgebildete Rotor rotierend angeordnet ist.

Als besonders zweckmäßig hat es sich erwiesen, wenn eine Einlassseite, auf welcher Milch und Luft zugeführt werden und eine Auslassseite, aus der der (fertige) Milchschaum abgeleitet wird entlang der Rotationsachse über die Mehrzahl der Scherelementreihen, insbesondere über sämtliche Scherelementreihen axial voneinander beabstandet sind, d.h., dass an einem axialen Ende die Zufuhr von Milch und Luft erfolgt und an dem gegenüberliegenden axialen Ende der Milchschaum abgeleitet wird. Als besonders zweckmäßig hat es sich erwiesen, wenn die Zuleitung oder die Zuleitungen für Milch und Luft sowie die Ableitung zumindest näherungsweise (axial beabstandet) auf derselben Radialposition, d.h. auf demselben Durchmesser angeordnet sind, was jedoch nicht zwingend ist.

Ganz besonders bevorzugt ist eine Ausführungsform der Milchaufschäumvorrichtung, bei der diese gleichzeitig als Fördereinrichtung ausgebildet ist, die selbsttätig für einen Vortrieb bzw. eine Förderung der Milch und der Luft in axialer Richtung entlang der Rotationsachse von Scherelementreihe zu Scherelementreihe bzw. von der Einlassseite zu der axial beabstandeten Auslassseite Sorge trägt, indem nämlich die Scherelemente selbst aufgrund ihrer Konturierung in Kombination mit der Rotationsbewegung, insbesondere in der Art von Turbinenschaufeln das Fluid bzw. die Fluide in axialer Richtung durch die Emulgiereinrichtung antreiben. Wie später noch im Rahmen eines einer erfindungsgemäßen Milchaufschäumvorrichtung umfassenden Milchaufschäumsystems erläutert werden wird eröffnet dies die Möglichkeit auf eine separate Fördereinrichtung, insbesondere eine Milchförderpumpe zu verzichten und die Milchförderung allein mit Hilfe der Milchaufschäumvorrichtung bzw. deren, insbesondere turbinenartig gestalteter Scherelemente zu realisieren. Eine kombinierte Milch- und Luftförderung kann dabei beispielsweise dadurch erreicht werden, dass zumindest ein Teil der rotorseitigen Scherelemente, bevorzugt über den größten Teil ihrer jeweiligen Axialerstreckung entlang der Rotationsachse eine entgegen der Umdrehungsrichtung geneigte und/oder gekrümmte in Umfangsrichtung weisende Seitenfläche aufweisen. Ganz besonders bevorzugt ist es dabei, wenn zur Erhöhung des Wirkungsgrades eines solchen turbinenartigen Antriebs die in Umfangsrichtung weisenden Seitenflächen der Statorscherelemente in der Umdrehungsrichtung des Rotors, also gegenläufig zu den zuvor beschriebenen Seitenflächen der Scherelemente des Rotors geneigt und/oder gekrümmt sind. Grundsätzlich reicht es aus, wenn an den Scherelementen des Rotors und/oder des Stators nur eine Umfangsrichtung orientierte Seitenfläche also die in die Umdrehungsrichtung vordere oder alternativ die in der Umdrehungsrichtung hintere Seitenflächen wie beschrieben geneigt ist. Ein optimaler Wirkungsgrad kann jedoch erreicht werden, wenn beide in Umfangsrichtung orientierten Seitenflächen der Rotorscherelemente und/oder der Statorscherelemente entsprechend geneigt und/oder gekrümmt sind.

Dies bedeutet also, dass mit Blickrichtung entlang der Rotationsachse von der Einlassseite in Richtung Auslassseite bei einer ebenen Abwicklung der Rotationselemente des Stators und des Rotors die linken Seitenflächen der Scherelemente bei einer Umdrehung entgegen dem Uhrzeigersinn in der Rotationsrichtung orientiert sind und die rechten Seitenflächen der Rotationsrichtung entgegen orientiert sind. Bei einer solchen Konfiguration ist es bevorzugt, wenn zumindest eine der Seitenflächen der Scherelemente des Rotors nach rechts, d.h. im Uhrzeigersinn, gekrümmt oder geneigt ist (in axialer Richtung betrachtet) und/oder zumindest eine der Seitenflächen der Scherelemente des Stators nach links, (d.h. in Umdrehungsrichtung des Rotors) geneigt oder gekrümmt ist, um einen entsprechenden Vortrieb bzw. Förderung von Milch und Luft zu erreichen.

Ganz besonders bevorzugt ist es, wenn die bevorzugt zumindest teilweise turbinenschaufelartig konturierten Scherelemente des Rotors und/oder des Stators so ausgebildet und in einer solchen Anzahl vorhanden sind, dass mit diesen ein Milch/Luftvolumenstrom von 30 bis 300 ml/min, insbesondere zwischen 50 und 200 ml/min, ganz besonders bevorzugt ein Volumenstrom von größer als 100 ml/min realisierbar ist, insbesondere bei Umdrehungszahlen des Rotors relativ zum Stator aus einem Wertebereich zwischen 2000 U/min und 10000 U/min, kann besonders bevorzugt zwischen 5000 U/ min und 7000 U/min.

Insbesondere dann, wenn die Milchaufschäumvorrichtung im Rahmen eines Milchaufschäumsystems mit einer separaten Fördereinrichtung, insbesondere Pumpe kombiniert werden soll, um somit höhere Freiheitsgrade in der Ansteuerung zu erhalten (hier ist dann die Fördermenge bzw. der Fördervolumenstrom der Milch und der Luft nicht oder zumindest nicht ausschließlich abhängig von der Rotationsgeschwindigkeit des Rotors), können die Scherelemente auch derart ausgebildet sein, dass diese die Milch und die Luft im Wesentlichen nicht axial entlang der Rotationsachse fördern - hier können die in Umfangsrichtung orientierten Seitenflächen der Scherelemente beispielsweise in einer Radialebene liegen. Auch ist es möglich, durch eine bevorzugt spiegelsymmetrische (bezogen auf eine radiale Spiegelebene) Verjüngung in Umfangsrichtung, beispielsweise durch eine konvexe oder dreieckige Konturgestaltung der Scherelemente, in axialer Richtung hin und her auf die Milch und die Luft wirkende Kräfte zu erzeugen, wodurch das Aufschäumergebnis verbessert und/oder zur Erzielung des gleichen Schäumergebnisses weniger Scherelemente eingesetzt werden können.

Als besonders vorteilhaft hat es sich herausgestellt, wenn die Milchaufschäumvorrichtung als Durchlauferhitzer ausgebildet ist, also integrierte Heizmittel aufweist, wobei es besonders zweckmäßig ist solche Heizmittel in den Stator zu integrieren, insbesondere in der Form einer elektrischen Heizung, beispielsweise einer Widerstandsheizung. Im Rahmen einer erfindungsgemäßen Milchaufschäumvorrichtung umfassenden Milchaufschäumsystems kann dann bevorzugt auf separate Heizmittel zum Erhitzen der Milch verzichtet werden.

Grundsätzlich ist es möglich, und im Rahmen der Weiterbildung der Erfindung vorgesehen, Milch und Luft bereits als Milch/Luftgemisch, insbesondere durch eine einzige (gemeinsame) Zuführleitung der Emulgiereinrichtung zuzuführen. Bevorzugt ist jedoch eine alternative Ausführungsvariante, wonach separate Zuführleitungen für Milch und Luft vorgesehen sind, wobei es besonders zweckmäßig ist, wenn der Milchleitung Mittel zur Einstellung des Durchsatzes bzw. des Milchvolumenstroms und/oder der Luftzuführleitung Mittel zur Einstellung des Luftvolumenstroms zugeordnet sind.

Die Erfindung führt auch, wie bereits angedeutet, auf ein Milchaufschäumsystem, welches eine nach dem Konzept der Erfindung ausgebildete Getränkezubereitungsvorrichtung mit einer??? Milchaufschäumvorrichtung umfasst. Hinsichtlich der konkreten Ausgestaltung des Milchaufschäumsystems gibt es unterschiedliche Möglichkeiten. Gemäß einer ersten Alternative sind der Milchaufschäumvorrichtung von den Scherelementen separate Fördermittel für die Milch zugeordnet, so dass der Milchvolumenstrom durch die Emulgiereinrichtung unabhängig von der Drehzahl der Rotationsachse der Milchaufschäumvorrichtung einstellbar ist. Gemäß einer alternativen Ausgestaltungsvariante wird bewusst auf solche Fördermittel verzichtet und der Vortrieb der Milch von einem Vorratsbehältnis hin zu einem Auslass wird alleine durch die Ausgestaltung der Scherelemente von Rotor und/oder Stator der Milchaufschäumvorrichtung erzeugt, insbesondere in der Art einer Turbine bzw. mit Hilfe von als Turbinenschaufeln wirkenden bzw. ausgebildeten Scherelementen.

Je nachdem, ob die Milchaufschäumvorrichtung integrale Heizmittel aufweist, kann im Rahmen des Systems auf von der Milchaufschäumvorrichtung separate Heizmittel zum Erwärmen der Milch verzichtet werden. Grundsätzlich ist es auch möglich gänzlich auf Heizmittel zu verzichten und/oder diese bybassbar oder abschaltbar zu gestalten, um mit der erfindungsgemäßen Milchaufschäumvorrichtung anstelle von heißem bzw. warmem Milchschaum auch kalten Milchschaum erzeugen zu können.

Darüber hinaus führt die Erfindung auch auf ein Verfahren zum Aufschäumen von Milch unter Verwendung einer erfindungsgemäßen Getränkezubereitungsvorrichtung und/oder eines erfindungsgemäßen Milchaufschäumsystems, wobei erfindungsgemäß vorgesehen ist, dass die Milch und die Luft axial entlang der Rotationsachse die axial alternierend angeordneten Scherelemente des Rotors und des Stators passiert (und in den axial beabstandeten Scherspalten zur Erzeugung von Milchschaum geschert werden).

Im Rahmen des Verfahrens werden die Milch und die Luft, axial in einer Förderrichtung entlang der Rotationsachse von Scherspalt zu Scherspalt, bzw. von Einlass zu Auslass gefördert. Für den Fall der Ausgestaltung von Scherelementen als Turbinenschaufeln ist es möglich, wenn dieser axiale Vortrieb ausschließlich durch Rotation des Rotors bewirkt wird.

Ganz besonders zweckmäßig ist es zur Verbesserung der Schäumwirkung bzw. der Schaumstruktur, wenn Milch und Luft in der Emulgierkammer axial entlang der Rotationsachse vor und zurück kraftbeaufschlagt werden, insbesondere durch eine entsprechende Ausgestaltung von zumindest einem Teil der Scherelemente, vorzugsweise von sämtlichen Scherelementen, wobei durch die Scherelemente des Rotors und/oder des Stators sich bevorzugt, insbesondere gerundet oder eckig in Umfangsrichtung verjüngen und ganz besonders bevorzugt diesbezüglich spiegelsymmetrisch ausgebildet sind zu einer senkrecht von der Rotationsachse durchsetzten jeweiligen Spiegelebene.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine erfindungsgemäße Milchaufschäumvorrichtung von au-ßen,
- Fig. 2 und 3:: Explosionsdarstellung der Milchaufschäumvorrichtung gemäß Fig. 1 aus unterschiedlichen Perspektiven, und
- Fig. 4 bis Fig. 19:: unterschiedliche Gestaltungsvarianten von Scherelementkonturen zur Erzielung unterschiedlicher Schäum- und/oder Fördereffekte.

In den Figuren sind gleiche Elemente und Elemente mit der gleichen Funktion mit den gleichen Bezugszeichen gekennzeichnet.

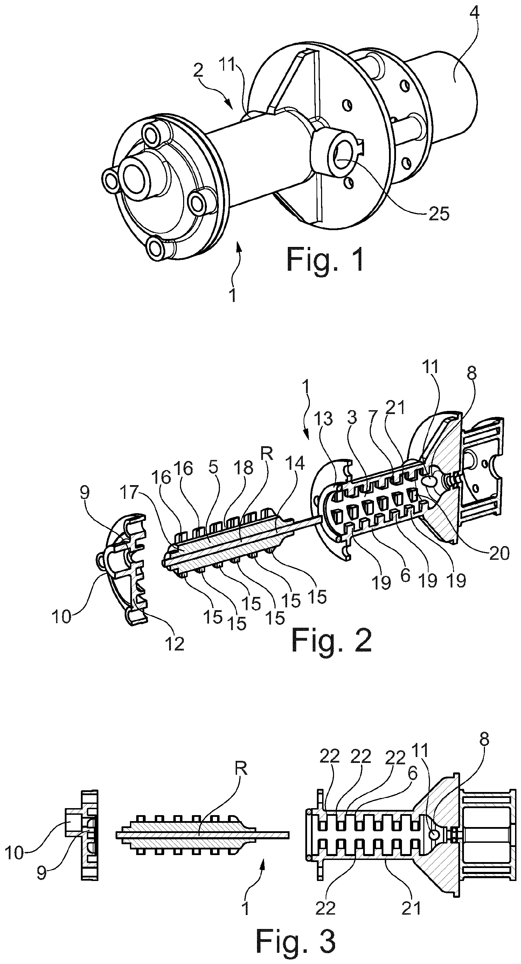

In den Fig. 1 bis 3 ist eine nach dem Konzept der Erfindung ausgebildete Milchaufschäumvorrichtung 1 als Bestandteil eines ansonsten nicht näher dargestellten Milchaufschäumsystems und einer nicht näher dargestellten Getränkezubereitungsvorrichtung, insbesondere einer Kaffeemaschine gezeigt.

Die Milchaufschäumvorrichtung 1 umfasst eine Emulgiereinrichtung 2, die eine Emulgierkammer 3 begrenzt bzw. beinhaltet. Die Emulgiereinrichtung 2 umfasst einen mittels eines elektromotorischen Antriebs 4 um eine langgestreckte Rotationsachse R rotierbaren Rotor 5 sowie einen den Rotor 5 mit Radialabstand umschließenden, als Hohlkörper ausgebildeten Stator 6, welcher in dem gezeigten Ausführungsbeispiel ein Gehäuse 7 der Emulgiereinrichtung 2, genauer der Emulgierkammer 3 bildet.

Die Emulgiereinrichtung 2 wird axial durchströmt von Milch und Luft, und zwar ausgehend von einer Einlassseite 8 in axialer Richtung zu einer Auslassseite 9. Einlassseite und Auslassseite 8, 9 der Emulgiereinrichtung sind entlang der Axialerstreckung der Rotationsachse beabstandet. Die Auslassseite 9 umfasst einen Milchschaumauslasskanal 10, während die Einlassseite 8 separate Zuführleitungen 11, 25 (vgl. Fig. 1) für Milch und Luft aufweist, von denen in den Figuren 2 und 3 nur eine Milchzuführleitung 11 gezeigt ist. Die Zuführleitung 25 für Luft mündet in die Einlassseite 8 in Umfangsrichtung beabstandet zur Zuführleitung 11. Alternativ kann durch eine einzige Zuführleitung auch bereits ein Milch/Luftgemisch zugeführt werden.

Der Rotor 5 ist axial in den Stator 6 eingesteckt, wobei das Gehäuse 7 auslassseitig von einem dem Milchschaumauslasskanal 10 beinhaltenden Deckel 12 verschlossen ist, welcher axial über eine Ringdichtung 13 relativ zu dem Stator 6 abgedichtet ist. Eine mit der Rotationsachse R zusammenfallende Antriebswelle 10 des Rotors 5 ist axial aus dem Stator 6 herausgeführt hin zu dem in Fig. 1 gezeigten, axial benachbart zu dem Gehäuse 7 angeordneten Antrieb 4.

Zu erkennen ist nun, dass an dem Rotor 5 insgesamt sechs in axialer Richtung jeweils voneinander beabstandete Scherelementreihen 15 angeordnet sind, die sich jeweils in Umfangsrichtung um die Rotationsachse R erstrecken und jeweils, hier beispielhaft vier in Umfangsrichtung beabstandete Scherelemente 6 umfassen, die in dem gezeigten Ausführungsbeispiel im Wege eines Spritzgussverfahrens einteilig mit einem Rotorkörper 17 ausgebildet sind, welcher im Wesentlichen zylindrisch konturiert ist und von dem aus sich die rotorseitigen Scherelemente 16 in radialer Richtung nach außen erstrecken.

In den umfänglichen Nuten bzw. Axiallücken 18 zwischen jeweils zwei benachbarten Scherelementreihen 15 des Rotors 5 ist jeweils eine von mehreren Scherelementreihen 19 des Stators 6 angeordnet. Lediglich beispielhaft umfassen die insgesamt beispielsweise sechs Scherelementreihen 19 des Stators 6 jeweils vier in Umfangsrichtung beabstandete (statorseitige) Scherelemente 20, die hier im Kunststoffspritzgussverfahren einteilig ausgebildet sind mit dem Gehäuse 7 bzw. einem das Gehäuse 7 bildenden Statorkörpers 21.

Im montierten Zustand, in dem sich der Rotor 5 innerhalb des Stators 6 befindet wechseln somit in axialer Richtung die Scherelementreihen 15 des Rotors 5 und die Scherelementreihen 19 des Stators 6 ab, d.h. in axialer Richtung entlang der Rotationsachse R folgt immer auf eine rotorseitige Scherelementseite 15 eine statorseitige Scherelementreihe 19, so dass zwischen jeder Scherelementreihe 15 des Rotors 5 und jeder Scherelementreihe 19 des Stators 6 ein axialer und sich in elementreihe 19 des Stators 6 ein axialer und sich in Umfangsrichtung erstreckender Scherspalt 22 begrenzt ist, in welchem durch die Rotation des Rotors 5 um die Rotationsachse R Milch und Luft geschert werden.

Wie später noch erläutert werden wird, kann zum Fördern des Milch/Luftvolumenstroms bzw. des Schaums eine Fördereinrichtung, insbesondere in Form einer Milchpumpe vorgesehen werden, die bevorzugt in Strömungsrichtung der Milch vor der Milchaufschäumeinrichtung 1 angeordnet ist. Für den Fall der Ausbildung der Scherelemente 16 und/oder 20 als Turbinenschaufeln kann ggf. auf eine solche Fördereinrichtung verzichtet werden.

Während des Betriebs werden eingangsseitig Milch und Luft zugeführt und die Milch und die Luft strömen in axialer Richtung entlang der Rotationsachse R hin zur Auslassseite 9, wobei, wie zu erkennen ist, Einlassseite 8 und Auslassseite 9 in axialer Richtung entlang der Rotationsachse R sämtliche Scherelementreihen 15, 19 von Rotor 5 und Stator 6 axial zwischen sich aufnehmen. Dies führ dann dazu, dass Milch und Luft in axialer Richtung von Scherspalt 22 zur Scherspalt 22 strömen und dabei abwechselnd eine Scherelementreihe 15 des Rotors und danach eine Scherelementreihe 19 des Stators 6 in axialer Richtung passieren, und zwar durch jeweils einen Bereich in Umfangsrichtung zwischen zwei der jeweiligen Scherelemente 16 bzw. 20.

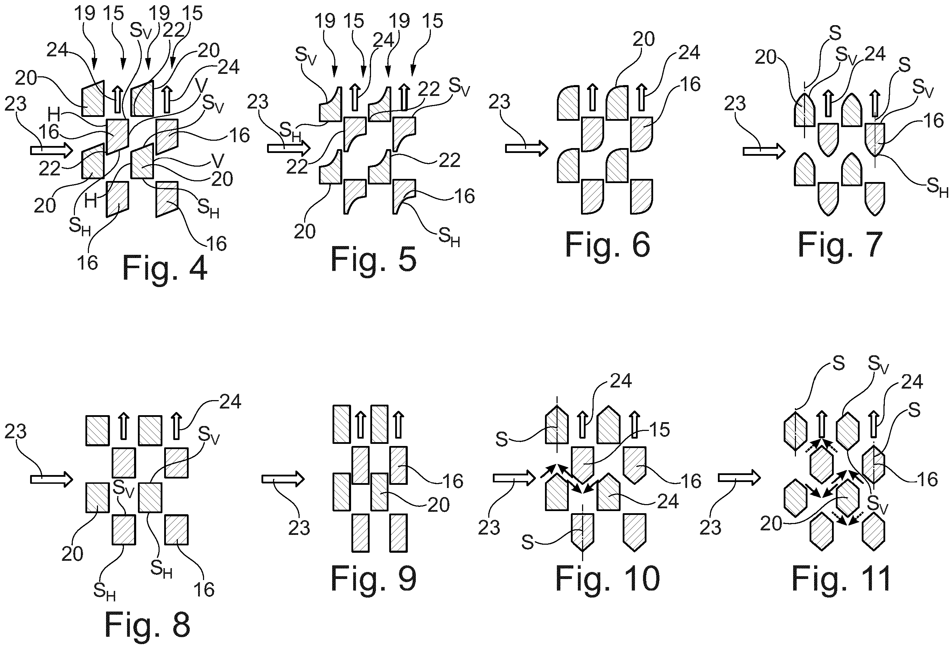

Anhand der Fig. 4 bis 19 werden im Folgenden unterschiedliche Konturvarianten von Scherelementen 16, 20 beschrieben, die zu unterschiedlichen Förder- und/oder Schäumeffekten führen. In sämtlichen Figuren kennzeichnet ein Pfeil 23 eine axiale Strömungsrichtung von Milch und Luft von einer Eingangsseite zu einer Ausgangsseite der Emulgiereinrichtung, wobei diese vereinfacht jeweils in einer Abwicklung dargestellt ist, und zwar derart, dass innen in der Zeichnungsebene links betrachtet nach rechts in der axialen Strömungsrichtung (Pfeil 23) beispielhaft auf eine Scherelementreihe 19 des Stators 6 eine Scherelementreihe 15 der Rotors 5 folgt, daraufhin wieder eine Scherelementreihe 19 des Stators 6 und dann wieder abschließend eine Scherelementreihe 15 des Rotors 5, wobei selbstverständlich weitere Scherelementreihen 19, 15 in axialer Richtung anschließen können. Die rotorseitigen Scherelementreihen 15 sind mit einem Umdrehungsrichtungspfeil 24 gekennzeichnet, der verdeutlicht, dass sich der Rotor 5 vorliegend beispielhaft im Gegenuhrzeigersinn dreht.

Zu erkennen ist auch, dass jede Scherelementreihe 15, 19 in Umfangsrichtung beabstandete Scherelemente 16 bzw. 20 aufweist, wobei die rotorseitigen Scherelemente 16 durch Rotation des Rotors 5 in der Pfeilrichtung 24 relativ zu den ortsfesten Scherelementen 20 rotieren. Vorstehende Erläuterungen beziehen sich auf sämtliche Figuren 4 bis 19, die insoweit analog aufgebaut sind. Ebenso allgemein gilt für sämtliche dargestellten Ausführungsbeispiele, dass die rotorseitigen Scherelemente 16 eine in der axialen Strömungsrichtung 23 vordere Axialseite V sowie eine entgegengesetzt axial orientierte Hinterseite H aufweisen. Die Vorderseite V und Hinterseite H sind miteinander verbunden über in Umfangsrichtung orientierte und sich axial erstreckende Seitenflächen S_{V}, S_{H}, wobei die mit dem Bezugszeichen S_{V} orientierten Seiten bzw. Seitenflächen in der Rotationsrichtung 24 orientiert sind, d.h. in der Rotationsrichtung 24 vorne angeordnet sind und die mit dem Bezugszeichen S_{H} gekennzeichneten Seitenflächen entgegen der Rotationsrichtung 24 weisen. Allen Ausführungsbeispielen ist zudem gemein, dass die vorderen und hinteren Seitenflächen V, H sowohl der Scherelemente 16 des Rotors 5 als auch der Scherelemente 20 des Stators 6 in Umfangsrichtung geradlinig sind, bzw. jeweils in Radialebenen liegen bzw. sich mit diesen decken.

Im Folgenden werden nun die Unterschiede der verschiedenen Scherelementkonturen der Ausführungsbeispiele gemäß den Fig. 4 bis 19 erläutert.

Aus Fig. 4 ist zu entnehmen, dass die Seitenflächen S_{H} der rotorseitigen Scherelemente 16 in der Pfeilrichtung 24 betrachtet über ihre gesamte Axialerstreckung nach in der Zeichnungsebene oben, d.h. in der Rotationsebene 24 abgeschrägt sind, während die gegenüberliegenden Seiten S_{V} in einer Radialebene liegen bzw. in axialer Richtung gerade sind. Bei den statorseitigen Scherelementen 20 ist die Konfiguration genau umgekehrt, d.h. die in der Rotationsrichtung 24 des Rotors 5 gerichteten Seitenflächen S_{V} sind in der Rotationsrichtung 24 abgeschrägt, während die gegenüberliegenden Seitenflächen S_{H} in axialer Richtung geradlinig ausgestaltet sind.

Bei den Ausführungsbeispielen gemäß den Figuren 5 bis 7 sind hydrodynamischere Konturen mit ähnlichem Effekt, wie das Ausführungsbeispiel gemäß Fig. 4, realisiert. Die in Rotationsrichtung 24 gelegenen Seitenflächen S_{V} der statorseitigen Scherelemente 20 sind konkav gewölbt bzw. gekrümmt in Richtung Rotationsrichtung 24. Die gegenüberliegenden Seitenflächen S_{H} sind in axialer Richtung gerade. Bei den rotorseitigen Scherelementen 16 ist ebenfalls über deren gesamte Axialerstreckung eine konkave Krümmung in Richtung der Rotationsrichtung 24 vorgesehen, und zwar bei den entgegen der Rotationsrichtung 24 orientierten Seitenflächen S_{H}, während die Seitenflächen S_{V} in axialer Richtung geradlinig sind. Dies führt dann, analog zu Fig. 4 dazu, dass die Umfangserstreckung der Scherelemente 16 des Rotors in der Pfeilrichtung 23 abnimmt, während die Umfangserstreckung der Scherelemente 20 des Stators in der Pfeilrichtung 23 zunimmt.

In Fig. 6 sind die konvexen Krümmungen der Fig. 5 durch konkave Krümmungen ersetzt worden, ansonsten gilt das zu Fig. 5 Gesagte analog.

Bei dem Ausführungsbeispiel gemäß Fig. 7 verjüngen sich die statorseitigen Scherelemente 20 mit ihrer in der Rotationsrichtung 24 gelegenen Seite S_{V} in der Rotationsrichtung 24, d.h. in Umfangsrichtung, und zwar mit konvexen Krümmungsradien. Dabei sind die Scherelemente 20 spiegelsymmetrisch zu einer jeweiligen, in einer Radialebene liegende Spiegelebene S ausgebildet.

Die Scherelemente 16 des Rotors 5 sind entgegengesetzt konturiert, d.h. hier ist die in der Rotationsrichtung 24 gelegene Seite Sv in axialer Richtung gerade und die gegenüberliegende Seite S_{H} verjüngt sich entgegen der Rotationsrichtung 24, und zwar ebenfalls mit konvexen Krümmungsradien, wobei auch hier eine spiegelsymmetrische Ausbildung zu einer radialen Spiegelebene gegeben ist.
Diese Ausbildung führt dazu, dass, analog zu Fig. 10, im Strömungsschatten der rotorseitigen Scherelemente 16 die Milch und die Luft ineinander entgegensetzte Axialrichtungen kraftbeaufschlagt werden, so dass es in axialer Richtung entlang der Rotationsachse R, die mit der Pfeilrichtung 23 zusammenfällt zu einer axialen Hin- und Herbewegung kommt, was in Fig. 20 durch die kleinen Pfeile angedeutet ist. Ansonsten entspricht das Ausführungsbeispiel gemäß Fig. 10 dem Ausführungsbeispiel gemäß Fig. 7, mit dem einzigen Unterschied, dass die konvex gekrümmten Verjüngungen durch geradlinige, pfeilförmige Verjüngungen ersetzt wurden. Bei dem Ausführungsbeispiel gemäß Fig. 11 verjüngen sich die Scherelemente 16, 20 in beide Umfangsrichtungen, und zwar beispielhaft mit der Pfeilkontur gemäß Fig. 10, so dass zusätzlich zur Strömungsschattenseite in einem vorderen Strömungsbereich eine axiale Hin- und Herkraftbeaufschlagung von Milch und Luft resultiert.

Fig. 8 zeigt eine Ausführungsvariante, bei der sowohl die rotorseitigen Scherelemente 16 als auch die statorseitigen Scherelemente 20 rechteckig konturiert sind, also in axialer Richtung durchgehend geradlinige Seiten S_{V} und S_{H} aufweisen. Es resultiert somit keine Fluidförderung in axialer Richtung entlang der Rotationsachse R.

Das Ausführungsbeispiel gemäß Fig. 9 entspricht dem Ausführungsbeispiel gemäß Fig. 8 mit dem einzigen Unterschied, dass die Axialerstreckung der Scherelemente 16, 20 zur Raumersparnis reduziert wurde - hier ist die Umfangserstreckung der Scherelemente 16, 20 deutlich größer als deren Axialerstreckung entlang der Rotationsachse R.

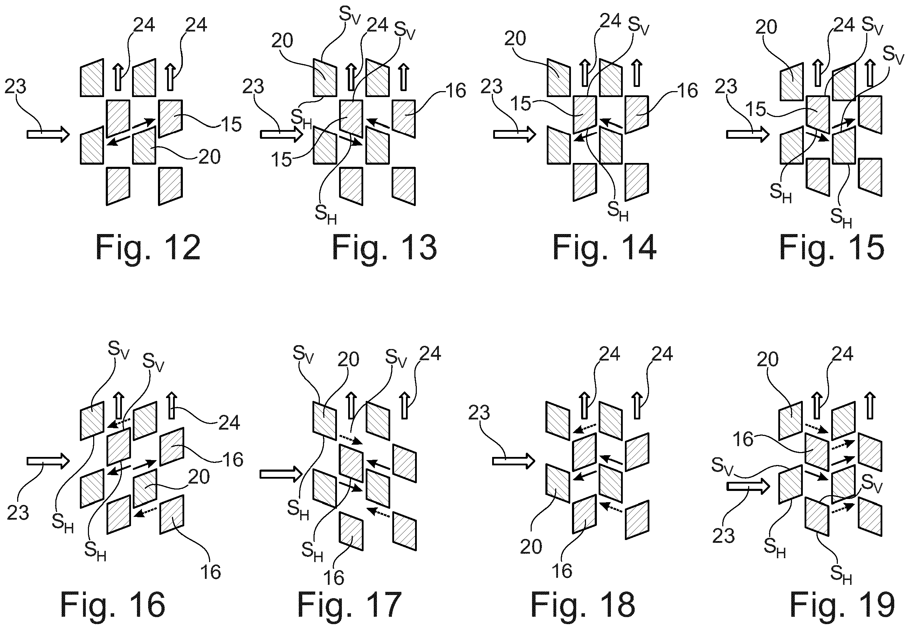

Das Ausführungsbeispiel gemäß Fig. 12 entspricht exakt dem Ausführungsbeispiel gemäß Fig. 4, wobei hier lediglich ergänzend kleine Pfeile eingezeichnet sind, die erkennen lassen, dass Milch und Luft in unterschiedliche Axialrichtungen, d.h. vor und zurück kraftbeaufschlagt werden in der Art einer Schüttelpumpe, wobei diese Axialkraftbeaufschlagung im Wesentlichen im Strömungsschatten der rotierenden Scherelemente 16 auftritt.

Bei dem Ausführungsbeispiel gemäß Fig. 13 sind die Seiten Sv entgegen der Rotationsrichtung 24 geneigt und deren Seiten S_{H} in axialer Richtung geradlinig - bei den rotorseitigen Scherelementen 16 ist dies umgekehrt, d.h., die Seiten Sv sind in axialer Richtung geradlinig und die Seiten S_{H} sind axial durchgehend entgegen der Rotationsrichtung 24 geneigt, was ebenfalls zu Axialkraftbeaufschlagung und damit zu einer axialen Hin- und Herbewegung des Milchluftgemisches führt.

Bei dem Ausführungsbeispiel gemäß Fig. 14 entspricht die Ausbildung bzw. Konfiguration der statorseitigen Scherelemente 20 der im Zusammenhang mit Fig. 13 beschriebenen Konstruktion der Scherelemente 20 des Stators 6, so dass die Umfangserstreckung der Scherelemente 20 in axialer Richtung bzw. in der Strömungsrichtung abnimmt. Im Gegensatz zu dem Ausführungsbeispiel gemäß Fig. 13 sind die Seitenflächen S_{H} der rotorseitigen Scherelemente 16 in der Rotationsrichtung 24 geneigt, so dass die Umfangserstreckung der Scherelemente 16 in axialer Richtung abnimmt. Dies führt dann zu einer der Strömungsrichtung 23 entgegengesetzten Kraftbeaufschlagung der Milch/Luft, so dass hier zwingend eine separate Pumpe vorgesehen sein muss, die die Milch in der Richtung 23 fördert, wobei die Förderleistung so ausgestaltet sein muss, dass trotz der entgegenwirkenden Kraftkomponente aufgrund der Kontur bzw. Geometrie der Scherelemente 16, 20 die Strömungsrichtung 23 resultiert.

Bei dem Ausführungsbeispiel gemäß Fig. 15 entspricht die Konfiguration der statorseitigen Scherelemente 20 denjenigen gemäß Fig. 4, wobei die Konfiguration bzw. Geometrie der rotorseitigen Scherelemente 16 derjenigen gemäß Fig. 13 entspricht, d.h. deren Umfangserstreckung nimmt in axialer Förderrichtung 23 zu, da die Seiten S_{H} entgegen der Strömungsrichtung 24 abgewinkelt sind (während die Seiten S_{V} gerade sind und die Seiten S_{V} der statorseitigen Scherelemente 20 in der Rotationsrichtung 24 geneigt sind und deren Seiten S_{H} in axialer Richtung geradlinig ausgestaltet sind).

In Fig. 19 ist ebenfalls eine Konfiguration als Turbine bzw. Pumpe gezeigt, d.h. die Anordnungen der Fig. 15, 19 sorgen dafür, dass Milch und Luft in der Förderrichtung 23 gefördert wird, wodurch bei Bedarf auf eine zusätzliche Förderpumpe verzichtet werden kann. Während die entsprechende Axialkraftbeaufschlagung des Fluids bei der Konfiguration gemäß Fig. 15 im Wesentlichen im Strömungsschatten der Scherelemente 16 resultiert, ist bei der Konfiguration gemäß Fig. 19 auch auf der in Umfangsrichtung gegenüberliegenden Seite der Scherelemente 16, 20 eine entsprechende Kraftbeauschlagung gegeben, was darauf zurückzuführen ist, dass im Unterschied zu Fig. 15 auch die Seiten S_{H} der statorseitigen Scherelemente 20 in der Rotationsrichtung 24 geneigt sind, hier parallel zu den zugehörigen Seiten S_{V}. Auch sind die Seiten S_{V} der rotorseitigen Scherelemente 16 entgegen der Rotationsrichtung 24 geneigt, genauso wie deren Seiten S_{H}.

Das Ausführungsbeispiel gemäß Fig. 18 entspricht dem Ausführungsbeispiel gemäß Fig. 19 mit dem Unterschied, dass die Neigungsrichtung sämtlicher Scherelemente 16, 20 gerade entgegengesetzt realisiert ist, wodurch eine relativ starke Strömungswirkung entgegen der Strömungsrichtung 23 resultiert, was durch das Vorsehen einer entsprechenden Pumpe ausgeglichen bzw. überspielt werden muss.

Bei dem Ausführungsbeispiel gemäß Fig. 17 entspricht die Konfiguration bzw. Geometrie der rotorseitigen Scherelemente 16 derjenigen des Ausführungsbeispiels gemäß Fig. 19, während die Geometrie der statorseitigen Scherelemente 20 derjenigen der statorseitigen Scherelemente 20 gemäß Fig. 18 entspricht, d.h. beide Seiten S_{V}, S_{H} sind entgegen der Rotationsrichtung 24 geneigt, sowohl bei den Scherelementen 16 des Rotors 5 als auch den Scherelementen 20 des Stators 6, was wieder zu einem Schüttelpumpeneffekt führt und Milch und Luft axial hin und her kraftbeauschlagt werden.

Bei dem Ausführungsbeispiel gemäß Fig. 16 ist die Neigungsrichtung der Scherelemente 16, 20 gerade umgekehrt wie bei dem Ausführungsbeispiel gemäß Fig. 17, d.h. die Konfiguration bzw. Kontur der rotorseitigen Scherelemente 16 entspricht derjenigen gemäß dem Ausführungsbeispiel gemäß Fig. 18, während die statorseitigen Scherelemente 20, wie im Ausführungsbeispiel gemäß Fig. 19 gezeigt, konturiert sind, d.h. die Seiten Sv, S_{H} der statorseitigen Scherelemente 20 sind in Rotationsrichtung 24 geneigt, ebenso wie die Seitenflächen S_{V}, S_{H} der rotorseitigen Scherelemente 16, was ebenfalls zu einer Kraftbeaufschlagung von Milch und Luft in einander entgegengesetzte Axialrichtungen resultiert.

### Bezugszeichen

- 1: Milchaufschäumvorrichtung
- 2: Emulgiereinrichtung
- 3: Emulgierkammer
- 4: Antrieb
- 5: Rotor
- 6: Stator
- 7: Gehäuse
- 8: Einlassseite
- 9: Auslassseite
- 10: Milchschaumauslasskanal
- 11: Zuführleitung für Milch
- 12: Deckel
- 13: Ringdichtung
- 14: Welle
- 15: Scherelementreihen des Rotors
- 16: Scherelemente des Rotors
- 17: Rotorkörper
- 18: Axiallücken
- 19: Scherelementreihen des Stators
- 20: Scherelemente des Stators
- 21: Statorkörper
- 22: Scherspalte
- 23: Pfeil (axiale Förderrichtung entlang der Rotationsachse)
- 24: Pfeil (Rotationsrichtung in Umfangsrichtung um die Rotationsachse)
- 25: Zuführleitung für Luft
- R: Rotationsachse
- V: Vorderseite
- H: Hinterseite
- S_{V}: in Rotationsrichtung weisende (Umfangs-) Seiten der Scherelemente
- S_{H}: entgegen der Rotationsrichtung weisende (Umfangs-) Seiten der Scherelemente
- S: Spiegelebene

## Patentansprüche

1. Kaffeemaschine, umfassend eine Milchaufschäumvorrichtung (1), wobei der Milchschaum einer weiteren Getränkekomponente, nämlich Kaffee, zusetzbar ist, und wobei die Kaffeemaschine eine Injektionseinheit zum Auslaugen und/oder Auflösen von in Getränkesubstratkapseln vorgesehenem Getränkesubstrat oder eine integrale Mühle und eine Brüheinheit, in der von der integralen Mühle aus Kaffeebohnen hergestelltes Kaffeemehl ausgelaugt wird, aufweist, , und wobei die eine mechanische Emulgiereinrichtung (2) aufweisende Milchaufschäumvorrichtung (1) einen Stator (6) und einen relativ zu dem Stator (6) um eine Rotationsachse (R) rotierbar antreibbaren Rotor (5) umfasst, wobei der Emulgiereinrichtung Milch und Luft einlassseitig zuführbar und durch Rotation des Rotors (5) relativ zu dem Stator (6) Scherkräften aussetzbar und dadurch Milchschaum erzeugbar ist, wobei der Milchschaum auslassseitig ableitbar ist, und wobei zum Erzeugen der Scherkräfte sowohl Rotor (5) als auch Stator (6) mehrere, Scherelemente (16, 20) umfassende Scherelementreihen (15, 19) aufweist, wobei die Scherelementreihen (15) des Rotors (5) und die Scherelementreihen (19) des Stators (6) derart intermittierend ineinandergreifen, dass die durch die intermittierenden Scherelementreihen (15, 19) strömende Milch und Luft bei Rotation (R) des Rotors (5) jeweils zwischen einer der Scherelementreihen (15) des Rotors (5) und einer unmittelbar benachbarten Scherelementreihe (19) des Stators (6) scherbar sind,
**dadurch gekennzeichnet,**
**dass** die Scherelementreihen (15) des Rotors (5) und die Scherelementreihen (19) des Stators (6) entlang der Rotationsachse (R) alternierend angeordnet sind.

2. Kaffeemaschine nach Anspruch 1,
**dadurch gekennzeichnet,**
**dass** die Scherelementreihen (15) des Rotors (5), jeweils mehrere in Umfangsrichtung um die Rotationsachse (R) beabstandete Scherelemente (16, 20) umfassen, die sich von einem sich entlang der Rotationsachse (R) erstreckenden Rotorkörper (17) des Rotors (5) in radialer Richtung, insbesondere von radial innen nach radial außen, erstrecken derart, dass die Milch und die Luft axial entlang der Rotationsachse (R) zwischen jeweils zwei der in Umfangsrichtung benachbarten Scherelemente (16) zu der axial benachbarten Scherelementreihe (19) des Stators (6) strömen, und/oder dass die Scherelementreihen (19) des Stators (6), jeweils mehrere in Umfangsrichtung um die Rotationsachse (R) beabstandete Scherelemente (20) umfasst, die sich von einem sich entlang der Rotationsachse (R) erstreckenden, bevorzugt hohlzylindrischem, Statorkörper (21) des Stators (6) in radialer Richtung, insbesondere von radial außen nach radial innen, erstrecken derart, dass die Milch und die Luft axial entlang der Rotationsachse (R) zwischen jeweils zwei der in Umfangsrichtung benachbarten Scherelemente (20) zu der axial benachbarten Scherelementreihe (19) des Rotors (5) strömen.

3. Kaffeemaschine nach einem der Ansprüche 1 oder 2,
**dadurch gekennzeichnet,**
**dass** eine Einlassseite (8) für Milch und Luft und Auslassseite (9) für Milchschaum entlang der Rotationsachse (R) über die Mehrzahl der Scherelementreihen (15, 19), insbesondere über sämtliche Scherelementreihen (15, 19), axial voneinander beabstandet sind.

4. Kaffeemaschine nach einem der vorhergehenden Ansprüche,
**dadurch gekennzeichnet,**
**dass** die, bevorzugt zylindrische, Emulgiereinrichtung (2) langgestreckt ausgebildet ist und eine größere, bevorzugt mindestens doppelt so große, noch weiter bevorzugt mindestens dreifach so große, Längenerstreckung entlang der Rotationsachse (R) als eine senkrecht dazu gemessene Durchmessererstreckung aufweist.

5. Kaffeemaschine nach einem der vorhergehenden Ansprüche,
**dadurch gekennzeichnet,**
**dass** zumindest ein Teil der Scherelemente (16), bevorzugt sämtliche, von zumindest einem Teil, bevorzugt sämtlicher, der Scherelementreihen (15) des Rotors (5) und/oder zumindest eine Teil, bevorzugt sämtliche, der Scherelemente (20) von zumindest einem Teil, bevorzugt sämtliche, der Scherelementreihen (19) des Stators (6) derart konturiert sind, dass die Milch und die Luft durch Rotation des Rotors (5) in axialer Richtung entlang der Rotationsachse (R) durch die Emulgiereinrichtung (2) förderbar ist.

6. Kaffeemaschine nach einem der vorhergehenden Ansprüche,
**dadurch gekennzeichnet,**
**dass** die Emulgiereinrichtung (2) zur axialen Förderung der Milch und der Luft turbinenartig ausgebildet ist und zumindest einen Teil der Scherelemente (16, 20) des Rotors (5) und/oder des Stators (6) als, insbesondere zur Rotationsachse (R) gekrümmte oder abgeschrägte, Turbinenschaufeln ausgebildet sind.

7. Kaffeemaschine nach einem der vorhergehenden Ansprüche,
**dadurch gekennzeichnet,**
**dass** zumindest ein Teil der Scherelemente (16), bevorzugt sämtliche, von zumindest einem Teil, bevorzugt sämtlicher, der Scherelementreihen (15) des Rotors (5) und/oder zumindest ein Teil, bevorzugt sämtliche, der Scherelemente (20) von zumindest einem Teil, bevorzugt sämtlicher, der Scherelementreihen (19) des Stators (6) derart konturiert sind, dass die Milch und die Luft in axialer Richtung entlang der Rotationsachse (R) vor und zurück kraftbeaufschlagbar, insbesondere förderbar oder in axialer Richtung entlang der Rotationsachse (R) nicht förderbar ist.

8. Kaffeemaschine nach einem der vorhergehenden Ansprüche,
**dadurch gekennzeichnet,**
**dass** die Milchaufschäumvorrichtung (1), insbesondere im Stator (6), integrierte Heizmittel aufweist.

9. Kaffeemaschine nach einem der vorhergehenden Ansprüche,
**dadurch gekennzeichnet,**
**dass** einlassseitig eine, insbesondere einzige, gemeinsame Zuführleitung für ein die Milch und die Luft umfassendes Milch-/Luftgemisch vorgesehen ist, oder dass separate Zuführleitungen (11, 25) für Milch und Luft in die Emulgiereinrichtung münden, denen bevorzugt Mittel zur Variation eines Milchvolumenstroms und/oder eines Luftvolumenstroms zugeordnet sind.

10. Kaffeemaschine nach einem der vorhergehenden Ansprüche,
**dadurch gekennzeichnet, dass**
die Milchaufschäumvorrichtung fluidleitend mit einer Milch- sowie einer Luftzuführleitung der Kaffeemaschine verbunden ist.

11. Milchaufschäumsystem, umfassend eine eine Kaffeemaschine nach einem der vorhergehenden Ansprüche, wobei gemäß einer ersten Alternative der Milchaufschäumvorrichtung (1) Fördermittel für Milch zugeordnet sind, mit denen Milch aus einem Vorratsbehälter axial durch die Emulgiereinrichtung förderbar ist oder gemäß einer zweiten Alternative keine von der Milchaufschäumvorrichtung (1) separate Fördermittel zum Fördern der Milch durch die Emulgiereinrichtung vorgesehen sind und die Förderung der Milch durch die Emulgierkammer, insbesondere ausschließlich, durch eine entsprechende Ausgestaltung der Scherelemente (16, 20) der Milchaufschäumvorrichtung (1) realisiert ist.

12. Verfahren zum Aufschäumen von Milch unter Verwendung einer Kaffeemaschine gemäß einem der Ansprüche 1 bis 10 und/oder eines Milchaufschäumsystems gemäß Anspruch 11, wobei Milch und Luft durch eine mechanische Emulgiereinrichtung, umfassend einen Stator (6) und einen relativ zu dem Stator (6) um eine Rotationsachse (R) rotierbar angetrieben Rotor (5) gefördert werden, in der Scherelementreihen (15) des Rotors (5) und Scherelementreihen (19) des Stators (6) derart intermittierend ineinandergreifen, dass die durch die intermittierenden Scherelementreihen (15, 19) strömende Milch und Luft bei der Rotation des Rotors (5) jeweils zwischen einer der Scherelementreihen (15) des Rotors (5) und einer unmittelbar benachbarten Scherelementreihe (19) des Stators (6) geschert werden,
**dadurch gekennzeichnet,**
**dass** die Scherelementreihen (15) des Rotors (5) und die Scherelementreihen (19) des Stators (6) entlang der Rotationsachse (R) entlang der Rotationsachse (R) alternierend angeordnet sind und daher die Milch und die Luft in axialer Richtung entlang der Rotationsachse (R) die alternierend angeordneten Scherelementreihen (15, 19) des Rotors (5) und des Stators (6) passiert.

13. Verfahren nach Anspruch 12,
**dadurch gekennzeichnet,**
**dass** die Milch und die Luft, insbesondere ausschließlich durch Rotation des Rotors (5) axial durch die Emulgiereinrichtung gefördert werden oder mittels einer davon separaten Fördereinrichtung.

14. Verfahren nach einem der Ansprüche 12 oder 13,
**dadurch gekennzeichnet,**
**dass** sich Milch und Luft in der Emulgierkammer axial entlang der Rotationsachse (R) vor und zurück kraftbeaufschlagt wird und sich bevorzugt vor und zurück bewegt.

## Claims

1. A coffee machine comprising a milk frothing device (1), wherein the milk froth is addable to another beverage component, namely to coffee, and wherein the coffee machine has an injection unit for leaching and/or dissolving beverage substrate provided in beverage substrate capsules or an integral grinder and a brewing unit in which coffee grounds produced from coffee beans by the integral grinder is leached, and wherein the milk frothing device (1) having a mechanical emulsification device (2) comprises a stator (6) and a rotor (5) which can be driven to rotate relative to said stator (6) around a rotation axis (R), wherein milk and air can be supplied to said emulsification device via the inlet side and exposed to shearing forces by means of the rotation of the rotor (5) relative to the stator (6), whereby milk froth is produced, said milk froth being removable via the outlet side, and the rotor (5) as well as the stator (6) having a plurality of shear element rows (15, 19) comprising shear elements (16, 20) for generating the shearing forces, wherein the shear element rows (15) of the rotor (5) and the shear element rows (19) of the stator (6) mesh in such an intermitting manner that milk and air flowing through the intermitting shear element rows (15, 19) are each shearable between one of the shear element rows (15) of the rotor (5) and one directly adjacent shear element row (19) of the stator (6) during rotation of the rotor (5),
**characterized in that**
the shear element rows (15) of the rotor (5) and the shear element rows (19) of the stator (6) are arranged alternately along the rotation axis (R).

2. The coffee machine according to claim 1,
**characterized in that**
the shear element rows (15) of the rotor (5) each comprise a plurality of shear elements (16, 20) spaced apart in the circumferential direction around the rotation axis (R), said shear elements extending in the radial direction, in particular from radially inwards to radially outwards, from a rotor body (17) of the rotor (5), which extends along the rotation axis (R), in such a manner that the milk and the air each flow in the axial direction along the rotation axis (R) between two of the shear elements (16) adjacent to each other in the circumferential direction to the shear element row (19) of the stator (6) adjacent in the axial direction and/or that the shear element rows (19) of the stator (6) each comprise a plurality of shear elements (20) spaced apart in the circumferential direction around the rotation axis (R) and extending in the radial direction, in particular from radially outwards to radially inwards, from a stator body (21) of the stator (6), which preferably has a hollow cylindrical shape and extends along the rotation axis (R), in such a manner that the milk and the air each flow in the axial direction along the rotation axis (R) between two of the shear elements (20) adjacent to each other in the circumferential direction to the shear element row (19) of the rotor (5) adjacent in the axial direction.

3. The coffee machine according to claim 1 or 2,
**characterized in that**
an inlet side (8) for milk and air and an outlet side (9) for milk froth are spaced apart axially along the rotation axis (R) across the majority of the shear element rows (15, 19), in particular across all shear element rows (15, 19).

4. The coffee machine according to any one of the preceding claims,
**characterized in that**
the preferably cylindrical emulsification device (2) is shaped in an elongated manner and comprises a longitudinal dimension that is larger than, preferably twice as large as, further preferably at least three times as large as, a diametrical dimension measured perpendicularly thereto along the rotation axis (R).

5. The coffee machine according to any one of the preceding claims,
**characterized in that**
at least some, preferably all of the shear elements (16) of at least some, preferably of all of the shear element rows (15) of the rotor (5) and/or at least some, preferably all of the shear elements (20) of at least some, preferably of all of the shear elements rows (19) of the stator (6) are contoured in such a manner that the milk and the air are transportable through the emulsification device (2) in the axial direction along the rotation axis (R) by means of the rotation of the rotor (5).

6. The coffee machine according to any one of the preceding claims,
**characterized in that**
for the axial transport of the milk and air, the emulsification device (2) is configured as a turbine and at least some of the shear elements (16, 20) of the rotor (5) and/or of the stator (6) are configured as turbine blades, in particular as turbine blades that are curved or sloped in relation to the rotation axis (R).

7. The coffee machine according to any one of the preceding claims,
**characterized in that**
at least some, preferably all of the shear elements (16), of at least some, preferably of all of the shear element rows (15) of the rotor (5) and/or at least some, preferably all of the shear elements (20) of at least some, preferably of all of the shear element rows (19) of the stator (6) are contoured in such a manner that the milk and the air can be subjected to a force, in particular transported, back and forth in the axial direction along the rotation axis (R) or not be transported in the axial direction along the rotation axis (R).

8. The coffee machine according to any one of the preceding claims,
**characterized in that**
the milk frothing device (1) comprises integrated heating means, in particular integrated into the stator (6).

9. The coffee machine according to any one of the preceding claims,
**characterized in that**
a joint supply line, in particular one singular joint supply line, for a milk-air-mixture comprising the milk and the air is provided on the inlet side, or that separate supply lines (11, 25) for milk and air open into the emulsification device, said supply lines preferably being equipped with means for varying a milk volume flow and/or an air volume flow.

10. The coffee machine according to any one of the preceding claims,
**characterized in that**
the milk frothing device is connected in a fluid-conducting manner to a milk supply line and an air supply line of the coffee machine.

11. A milk frothing system comprising a coffee machine according to any one of the preceding claims, wherein according to a first alternative transport means for milk are assigned to the milk frothing device (1), by means of which milk is transportable from a storage container in the axial direction through the emulsification device or, according to a second alternative, no transport means separate from the milk frothing device (1) are provided for transporting the milk through the emulsification device and the transport of the milk through the emulsification chamber is realized, in particular exclusively, by accordingly designed shear elements (16, 20) of the milk frothing device (1).

12. A method for frothing milk using a coffee machine according to any one of claims 1 to 10 and/or a milk frothing device according to claim 11, wherein milk and air are transported through a mechanical emulsification device comprising a stator (6) and a rotor (5) which can be driven to rotate relative to said stator (6) around a rotation axis (R), wherein shear element rows (15) of the rotor (5) and shear element rows (19) of the stator (6) mesh in such an intermitting manner that milk and air flowing through the intermitting shear element rows (15, 19) are each sheared between one of the shear element rows (15) of the rotor (5) and one directly adjacent shear element row (19) of the stator (6) during rotation of the rotor (5),
**characterized in that**
the shear element rows (15) of the rotor (5) and the shear element rows (19) of the stator (6) are arranged alternately along the rotation axis (R), and thus the milk and the air pass the alternately arranged shear element rows (15, 19) of the rotor (5) and of the stator (6) in the axial direction along the rotation axis (R).

13. The method according to claim 12,
**characterized in that**
the milk and the air are transported through the emulsification device in the axial direction, in particular exclusively by means of the rotation of the rotor (5) or by means of a separate transport device.

14. The method according to claim 12 or 13,
**characterized in that**
milk and air are subjected to a force back and forth and preferably move back and forth in the axial direction along the rotation axis (R) in the emulsification chamber.

## Revendications

1. Machine à café comprenant un dispositif mousseur de lait (1), dans lequel la mousse de lait peut être ajoutée à un autre composant de boisson, notamment du café, et dans lequel la machine à café a une unité d'injection pour la lixiviation et/ou la dissolution de substrat de boisson prévu dans des capsules de substrat de boisson ou un moulin intégral et une unité d'échaudage dans laquelle de café moulu produit à partir de grains de café est lessivé, et dans lequel le dispositif mousseur de lait (1) ayant un dispositif d'émulsification (2) mécanique comprend un stator (6) et un rotor (5) entraînable en rotation par rapport au stator (6) autour d'un axe de rotation (R), du lait et de l'air pouvant être fournis audit dispositif d'émulsification du côté d'admission et pouvant être exposés à des forces de cisaillement par la rotation du rotor (5) par rapport au stator (6), ainsi produisant de la mousse de lait, la mousse de lait pouvant être évacuée du côté de sortie, et tant le rotor (5) que le stator (6) ayant plusieurs rangées (15, 19) d'éléments de cisaillement comprenant des éléments de cisaillement (16, 20) pour la production des forces de cisaillement, les rangées (15) d'éléments de cisaillement du rotor (5) et les rangées (19) d'éléments de cisaillement du stator (6) s'engrenant de façon intermittente de telle manière que du lait et de l'air coulant à travers les rangées (15, 19) d'éléments de cisaillement intermittentes peuvent être cisaillés chacun entre une des rangées (15) d'éléments de cisaillement du rotor (5) et une rangée (19) d'éléments de cisaillement immédiatement adjacente du stator (6) lors de la rotation du rotor (5),
**caractérisée en ce que**
les rangées (15) d'éléments de cisaillement du rotor (5) et les rangées (19) d'éléments de cisaillement du stator (6) sont disposées de manière alternante le long de l'axe de rotation (R).

2. Machine à café selon la revendication 1,
**caractérisée en ce que**
chaque rangée (15) d'éléments de cisaillement du rotor (5) comprend plusieurs éléments de cisaillement (16, 20) qui sont espacés dans la direction circonférentielle autour de l'axe de rotation (R) et qui s'étendent dans la direction radiale, notamment de l'intérieur radial à l'extérieur radial, à partir d'un corps (17) du rotor (5), qui s'étend le long de l'axe de rotation (R), de telle manière que le lait et l'air coulent chacun axialement le long de l'axe de rotation (R) entre deux des éléments de cisaillement (16) adjacents dans la direction circonférentielle vers la rangée (19) d'éléments de cisaillement axialement adjacente du stator (6), et/ou **en ce que** chaque rangée (19) d'éléments de cisaillement du stator (6) comprend plusieurs éléments de cisaillement (20) qui sont espacés dans la direction circonférentielle autour de l'axe de rotation (R) et qui s'étendent dans la direction radiale, notamment de l'extérieur radial à l'intérieur radial, à partir d'un corps (21) du stator (6), qui est de préférence en forme de cylindre creux et qui s'étend le long de l'axe de rotation (R), de telle manière que le lait et l'air coulent chacun axialement le long de l'axe de rotation (R) entre deux des éléments de cisaillement (20) adjacents dans la direction circonférentielle vers la rangée (19) d'éléments de cisaillement axialement adjacente du rotor (5).

3. Machine à café selon la revendication 1 ou la revendication 2,
**caractérisée en ce**
**qu'**un côté d'admission (8) pour le lait et l'air et un côté de sortie (9) pour la mousse de lait sont axialement espacés l'un de l'autre le long de l'axe de rotation (R) par la majorité de rangées (15, 19) d'éléments de cisaillement, notamment par toutes les rangées (15, 19) d'éléments de cisaillement.

4. Machine à café selon l'une quelconque des revendications précédentes,
**caractérisée en ce que**
le dispositif d'émulsification (2), de préférence cylindrique, est sous forme allongée et présente une longueur le long de l'axe de rotation (R) qui est supérieure à, de préférence au moins deux fois, mieux encore au moins trois fois, le diamètre mesuré perpendiculairement à celui-ci.

5. Machine à café selon l'une quelconque des revendications précédentes,
**caractérisée en ce**
**qu'**au moins une partie des éléments de cisaillement (16), de préférence tous les éléments de cisaillement (16) d'au moins une partie des rangées (15) d'éléments de cisaillement, de préférence de toutes les rangées (15) d'éléments de cisaillement, du rotor (5) et/ou au moins une partie des éléments de cisaillement (20), de préférence tous les éléments de cisaillement (20) d'au moins une partie des rangées (19) d'éléments de cisaillement, de préférence de toutes les rangées (19) d'éléments de cisaillement, du stator (6) présentent un tel contour que le lait et l'air peuvent être transportés à travers le dispositif d'émulsification (2) dans la direction axiale le long de l'axe de rotation (R) par la rotation du rotor (5).

6. Machine à café selon l'une quelconque des revendications précédentes,
**caractérisée en ce que**
le dispositif d'émulsification (2) est configuré en forme de turbine en vue du transport axial du lait et de l'air et au moins une partie des éléments de cisaillement (16, 20) du rotor (5) et/ou du stator (6) sont configurés comme aubes de turbine notamment courbées ou chanfreinées par rapport à l'axe de rotation (R).

7. Machine à café selon l'une quelconque des revendications précédentes,
**caractérisée en ce**
**qu'**au moins une partie des éléments de cisaillement (16), de préférence tous les éléments de cisaillement (16), d'au moins une partie des rangées (15) d'éléments de cisaillement, de préférence de toutes les rangées (15) d'éléments de cisaillement, du rotor (5) et/ou au moins une partie des éléments de cisaillement (20), de préférence tous les éléments de cisaillement (20), d'au moins une partie des rangées (19) d'éléments de cisaillement, de préférence de toutes les rangées (19) d'éléments de cisaillement, du stator (6) présentent un tel contour que le lait et l'air peuvent être soumis à une force, notamment transportés, en avant et en arrière dans la direction axiale le long de l'axe de rotation (R) ou ne peuvent pas être transportés dans la direction axiale le long de l'axe de rotation (R).

8. Machine à café selon l'une quelconque des revendications précédentes,
**caractérisée en ce que**
le dispositif mousseur de lait (1) a des moyens de chauffage intégrés, notamment dans le stator (6).

9. Machine à café selon l'une quelconque des revendications précédentes,
**caractérisée en ce**
**qu'**un conduit d'alimentation commun, notamment un seul conduit d'alimentation commun, pour un mélange lait-air comprenant le lait et l'air est disposé du côté d'admission ou **en ce que** des conduits d'alimentation (11, 25) séparés pour le lait et l'air auxquels de préférence des moyens pour varier un débit volumique de lait et/ou un débit volumique d'air sont associés débouchent dans le dispositif d'émulsification.

10. Machine à café selon l'une quelconque des revendications précédentes,
**caractérisée en ce que**
le dispositif mousseur de lait est relié en communication de fluide à un conduit d'alimentation en lait et à un conduit d'alimentation en air de la machine à café.

11. Système de moussage de lait comprenant une machine à café selon l'une quelconque des revendications précédentes, dans lequel, selon une première alternative, des moyens de transport de lait par lesquels du lait peut être transporté à partir d'un réservoir axialement à travers le dispositif d'émulsification sont associés au dispositif mousseur de lait (1) ou, selon une deuxième alternative, aucun moyen de transport séparé du dispositif mousseur de lait (1) pour transporter le lait à travers le dispositif d'émulsification n'est prévu et le transport du lait à travers la chambre d'émulsification est réalisé, notamment exclusivement, par une configuration appropriée des éléments de cisaillement (16, 20) du dispositif mousseur de lait (1).

12. Procédé de moussage de lait utilisant une machine à café selon l'une quelconque des revendications 1 à 10 et/ou un système de moussage de lait selon la revendication 11, dans lequel du lait et de l'air sont transportés à travers un dispositif d'émulsification mécanique qui comprend un stator (6) et un rotor (5) entraînable en rotation par rapport au stator (6) autour d'un axe de rotation (R) et dans lequel des rangées (15) d'éléments de cisaillement du rotor (5) et des rangées (19) d'éléments de cisaillement du stator (6) s'engrènent de façon intermittente de telle manière que le lait et l'air coulant à travers les rangées (15, 19) d'éléments de cisaillement intermittentes sont cisaillés chacun entre une des rangées (15) d'éléments de cisaillement du rotor (5) et une rangée (19) d'éléments de cisaillement immédiatement adjacente du stator (6) lors de la rotation du rotor (5),
**caractérisé en ce que**
les rangées (15) d'éléments de cisaillement du rotor (5) et les rangées (19) d'éléments de cisaillement du stator (6) sont disposées de manière alternante le long de l'axe de rotation (R) et donc le lait et l'air traversent les rangées (15, 19) d'éléments de cisaillement du rotor (5) et du stator (6) disposées de manière alternante dans la direction axiale le long de l'axe de rotation (R).

13. Procédé selon la revendication 12,
**caractérisé en ce que**
le lait et l'air sont transportés axialement à travers le dispositif d'émulsification, notamment exclusivement par la rotation du rotor (5) ou au moyen d'un dispositif de transport séparé.

14. Procédé selon la revendication 12 ou la revendication 13,
**caractérisé en ce que**
le lait et l'air sont soumis à une force en avant et en arrière et se déplace de préférence en avant et en arrière axialement le long de l'axe de rotation (R) dans la chambre d'émulsification.
